(19) Europäisches Patentamt / European Patent Office / Office européen des brevets

(11) **EP 4 085 768 A1**

(12) **DEMANDE DE BREVET EUROPEEN**

(43) Date de publication:
**09.11.2022   Bulletin 2022/45**

(21) Numéro de dépôt: **22171198.9**

(22) Date de dépôt: **02.05.2022**

(51) Classification Internationale des Brevets (IPC):
**A23L 7/104** (2016.01)    **A23L 2/02** (2006.01)
**A23G 1/52** (2006.01)    **A23L 11/00** (2021.01)

(52) Classification Coopérative des Brevets (CPC):
(C-Sets disponibles)
**A23L 7/104; A23G 1/48; A23G 1/52; A23L 2/02;
A23L 11/05;** A23V 2002/00          (Cont.)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité:  **07.05.2021   FR 2104865**

(71) Demandeur: **Biogroupe**
**22430 Erquy (FR)**

(72) Inventeurs:
• **DECAMPS, Christophe**
**22430 ERQUY (FR)**
• **LION, Maud**
**22430 ERQUY (FR)**

(74) Mandataire: **Cabinet Le Guen Maillet**
**3, impasse de la Vigie**
**CS 71840**
**35418 Saint-Malo Cedex (FR)**

(54) **BLANC VEGETAL FOISONNE**

(57)    La présente invention concerne un blanc végétal foisonné, ou ingrédient végétal foisonné, qui se caractérise en ce qu'il comprend, ou est constitué de, une base végétale fermentée au jus de céréales, préférentiellement de riz, et un jus de cuisson de pois chiches, selon un ratio entre la base végétale fermentée au jus de céréales et le jus de cuisson de pois chiches compris entre 10/90 et 90/10.

EP 4 085 768 A1

(52) Classification Coopérative des Brevets (CPC):
(Cont.)

C-Sets
A23V 2002/00, A23V 2200/122, A23V 2200/226,
A23V 2200/262, A23V 2200/264, A23V 2250/21

**Description**

La présente invention se situe dans le domaine alimentaire et concerne un ingrédient végétal foisonné, ou blanc végétal foisonné, et son utilisation dans la préparation d'aliments aérés ou foisonnés.

Les aliments aérés ou foisonnés sont préparés par une méthode qui consiste à disperser une phase gazeuse, typiquement de l'air, de l'azote ou autre gaz, par battage, injection ou fouettage, dans une base alimentaire.

Les produits alimentaires aérés, ou foisonnés, tels que les mousses, les meringues ou les gâteaux, sont classiquement élaborés à partir de blancs d'œufs foisonnés. Aujourd'hui, cependant, bon nombre de consommateurs sont à la recherche de produits alimentaires sans ingrédients d'origine animale ou sans œufs, pour des questions de goûts, de convictions ou médicales. On citera notamment les produits destinés aux personnes allergiques aux œufs.

L'élaboration de produits alimentaires aérés ou foisonnés, à partir de bases alimentaires d'origine végétale, se réalise aujourd'hui sur des bases à pH neutre et nécessite l'ajout d'additifs tels des texturants, des émulsifiants, des agents foisonnants, de stabilisants ou encore du sucre et du sel pour compenser l'absence des fonctionnalités présentes dans le blanc d'œuf foisonné. L'ajout de ces ingrédients va à l'encontre de la naturalité des produits alimentaires, une caractéristique pourtant recherchée par les consommateurs. Un but de la présente invention est de proposer un nouvel ingrédient d'origine végétale, et son procédé de fabrication, pouvant être utilisé dans l'élaboration de produits alimentaires aérés ou foisonnés, notamment en substitution aux blancs d'œufs foisonnés, et sans nécessiter l'ajout d'ingrédients supplémentaires autres que ceux naturellement présents dans la base alimentaire à aérer, tels que des additifs, du sucre ou du sel.

Un autre but de la présente invention est de proposer un procédé de préparation de produits alimentaires aérés ou foisonnés, en particulier d'origine uniquement végétale, à partir de ce nouvel ingrédient d'origine végétale.

Un autre but de la présente invention est de proposer des produits alimentaires aérés ou foisonnés, en particulier d'origine uniquement végétale, obtenus à partir de ce nouvel ingrédient d'origine végétale et présentant des propriétés organoleptiques et fonctionnelles intéressantes et nouvelles.

A cet effet, l'invention concerne un ingrédient végétal foisonné qui se caractérise en ce qu'il comprend, ou est constitué de, une base végétale fermentée au jus de céréales, préférentiellement de riz, et un jus de cuisson de pois chiches, selon un ratio entre la une base végétale fermentée au jus de céréales et le jus de cuisson de pois chiches compris entre 10/90 et 90/10.

Avantageusement, l'ingrédient végétal foisonné selon l'invention présente un pH compris entre 3 et 6.

L'ingrédient végétal foisonné selon l'invention se présente sous la forme d'une mousse compacte blanche, dense, stable et reproductible. Il peut être qualifié de blanc végétal foisonné, par comparaison à un blanc d'œuf foisonné. La stabilité de l'ingrédient est une caractéristique particulièrement avantageuse. En effet, lors de la fabrication de produits alimentaires à l'échelle industrielle, les ingrédients ne sont pas forcément mélangés ou incorporés dans le procédé de préparation à un instant précis. Il peut y avoir des temps d'attente résultant de l'arrêt d'une machine ou de l'attente de la préparation d'un des ingrédients. Un ingrédient foisonné qui ne serait pas stable ne conviendrait pas à de tels procédés industriels. L'ingrédient végétal foisonné selon l'invention permet de résoudre ce problème.

La stabilité dans le produit alimentaire fini est également importante. En effet, le temps d'attente avant conditionnement dans le pot définitif peut être plus ou moins long. Le produit doit donc résister aux temps d'attente et aux pressions subies telles que le passage en tuyauterie pour le conditionnement dans les pots. Le produit fini doit également être stable pendant la totalité de sa durée de vie, de la fabrication jusqu'à sa DLC. L'ingrédient végétal foisonné selon l'invention permet de résoudre ce problème.

La reproductibilité se caractérise par la capacité à produire une mousse homogène, quel que soit l'instant t pendant le procédé de production du produit fini, mais également quel que soit le jour de fabrication. A l'échelle industrielle notamment, la standardisation d'une production à l'autre est indispensable. L'ingrédient végétal foisonné selon l'invention permet de résoudre ce problème.

Par ailleurs, la composition uniquement végétale de l'ingrédient foisonné selon l'invention permet l'élaboration de tout produit alimentaire aéré garanti sans origine animale.

Enfin, un autre avantage conféré à l'ingrédient foisonné selon l'invention est l'apport de ferments dans le produit alimentaire aéré fini, permettant d'une part, l'élaboration de produits à pH acides et, d'autre part, l'obtention de bienfaits sur le microbiote.

L'invention concerne encore un procédé de préparation d'un ingrédient végétal foisonné, qui se caractérise en ce qu'il comprend les étapes de :

- obtention d'une base végétale fermentée au jus de céréales,
- obtention d'un jus de cuisson de pois chiches,
- mélange de la base végétale fermenté au jus de céréales et du jus de cuisson de pois chiches selon un ratio compris entre 10/90 et 90/10,
- foisonnement dudit mélange à une température comprise entre 4 et 50°C durant 5 à 30 minutes.

Préférentiellement, la base végétale fermentée au jus de céréales est une base végétale fermentée au jus de riz.

Une base végétale fermentée au jus de céréales peut être obtenu commercialement. Il s'agira notamment du produit commercialisé sous la marque YA RIZ par la société Biogroupe S.A., France. Une base végétale fermentée au jus de céréales est communément désignée par les consommateurs comme un « yaourt de lait de céréales fermenté ».

Alternativement, une base végétale fermentée au jus de céréales peut être obtenu en mettant en œuvre les étapes suivantes :

- trempage des céréales dans de l'eau,
- broyage des céréales,
- cuisson-pasteurisation,
- refroidissement,
- ajout de ferments,
- fermentation,
- stockage.

Les procédés de préparations de bases végétales fermentées au jus de céréales, notamment de riz, sont connus et un homme du métier parviendra sans efforts à en identifier les paramétrages nécessaires.

L'obtention d'un jus de cuisson de pois chiches est également une étape en soi connue, consistant simplement en la cuisson de pois chiches dans de l'eau. Le jus de cuisson obtenu est connu sous le nom d'aquafaba.

Préférentiellement, selon l'invention, l'obtention du jus de cuisson de pois chiches comprend la cuisson de pois chiches dans de l'eau sans ajout de sel.

L'étape de foisonnement du mélange peut être réalisée à l'aide de tout matériel approprié. En particulier on pourra utiliser un batteur planétaire professionnel.

L'étape de foisonnement du mélange est poursuivie durant une période de 5 à 15 minutes, jusqu'à l'obtention de la texture foisonnée recherchée.

L'ingrédient végétal foisonné obtenu à l'issue du procédé peut être utilisé dans la préparation d'un produit alimentaire à partir d'une base alimentaire devant être aérée.

Ainsi, l'invention concerne encore un procédé de préparation d'un produit alimentaire aéré à partir d'une base alimentaire et d'un ingrédient végétal foisonné tel que décrit précédemment, le procédé se caractérisant en ce qu'il comprend les étapes de :

- préparation de la base alimentaire à aérer,
- préparation de l'ingrédient végétal foisonné selon l'invention,
- incorporation et mélange de l'ingrédient foisonné selon l'invention dans la base alimentaire.

La base alimentaire à aérer s'entend de toute matrice alimentaire destinée à être présentée sous forme aérée ou foisonnée. Cette base alimentaire sera, en particulier, dans le cadre de l'invention, d'origine végétale.

Ainsi, préférentiellement, la base alimentaire à aérer est un chocolat fondu, un mélange de chocolat et de beurre de cacao fondu, une purée de fruits, une purée de légumes, une purée de fruits et de légumes, une poudre telle que du sucre.

Selon une caractéristique de l'invention, le procédé est exempt d'étapes d'ajout de tout autre ingrédient que ceux mentionnés précédemment et, notamment, est exempt d'étapes d'ajout de texturants, d'émulsifiants, d'œufs entiers ou de blancs d'œufs foisonnés, d'agents foisonnants, de correcteurs d'acidité ou de sel ou sucre autres que les sels ou sucres naturellement contenus dans la base alimentaire à aérer ou dans l'ingrédient végétal foisonné.

L'invention concerne enfin un produit alimentaire aéré, qui se caractérisé en ce qu'il comprend un ingrédient végétal foisonné tel que décrit précédemment. En particulier, un tel produit est obtenu par la mise en œuvre des procédés décrits précédemment.

Les caractéristiques de l'invention mentionnées ci-dessus, ainsi que d'autres, apparaîtront plus clairement à la lecture de la description suivante d'exemples de réalisation.

**Exemple 1 : mousses végétales au chocolat**

Des mousses végétales au chocolat sont obtenues à partir des ingrédients listés dans la Tableau 1.

[Tableau 1]

| Ingrédient | | Plages de concentration |
| --- | --- | --- |
| Base végétale fermentée au jus de céréales | | 20-40% 200g |

(suite)

| Ingrédient | | Plages de concentration |
|---|---|---|
| | YA RIZ® (Eau, riz, ferments) | |
| | | |
| Aquafaba | Eau de cuisson de pois chiches sans sel ajouté | 5-30% 100g |
| Base alimentaire à aérer | Chocolat 57% Cacao | 20-50% 250g |
| | Beurre de cacao | 1-10% 50g |

Préparation de l'ingrédient végétal foisonné :

- La base végétale fermentée au jus de céréales et le jus de cuisson des pois chiches sont mélangés dans un appareil dédié au foisonnement selon un ratio compris entre 10/90 et 90/10, préférentiellement 50/50.
- Le mélange est foisonné à une température comprise entre 4 et 50°C durant 5 à 30 minutes.

A l'issue du procédé, on obtient un ingrédient foisonné présentant l'aspect d'une mousse de couleur blanche, dense, ferme, et stable. Le pH se situe entre 3 et 6.

De manière à illustrer le foisonnement, la capacité moussante CM de l'ingrédient est mesurée à l'aide de la formule suivante :

$$CM = \frac{\text{volume après foisonnement}}{\text{volume avant foisonnement}} * 100$$

Les valeurs de CM obtenues sont comprises entre 765 et 940 %.

Préparation de la mousse au chocolat :

- La base alimentaire à aérer est préparée par mélange et fonte du chocolat et du beurre de cacao.

- L'ingrédient végétal foisonné et la base alimentaire sont mélangés.

- La mousse obtenue est conditionnée dans des pots et stockée au froid.

La stabilité de la mousse est observée durant 1 à 2 mois.

**Exemple 2 : nuages végétariens croustillants**

Des nuages végétariens croustillants, équivalents végétariens de meringues, mais sans œufs, sont obtenus à partir des ingrédients listés dans la Tableau 2.

[Tableau 2]

| Ingrédient | | Quantités (grammes) |
|---|---|---|
| Base végétale fermentée au jus de céréales | | |
| | YA RIZ® | 20 |
| | | |
| Aquafaba | Eau de cuisson de pois chiche sans sel ajouté | 80 |

(suite)

| Ingrédient | | Quantités (grammes) |
|---|---|---|
| Base alimentaire à aérer | Sucre glace | 100 |

L'ingrédient végétal foisonné est préparé comme dans l'exemple 1. Par la suite, la préparation des meringues est réalisée selon toute méthode connue.

**Exemple 3 : génoise (gâteau aéré)**

Une génoise est obtenue à partir des ingrédients listés dans la Tableau 3.

[Tableau 3]

| Ingrédients | | Quantités (grammes) |
|---|---|---|
| Base végétale fermentée au jus de céréales | | |
| | YA RIZ® | 150 |
| | | |
| Aquafaba | Eau de cuisson de pois chiche sans sel ajouté | 110 |
| Base alimentaire à aérer | Farine de blé sucre levure | 100 100 2,5 |

L'ingrédient végétal foisonné est préparé comme dans l'exemple 1. Par la suite, la préparation des meringues est réalisée selon toute méthode connue.

**Revendications**

1. Procédé de préparation d'un ingrédient végétal foisonné, **caractérisé en ce qu'**il comprend les étapes de :

   - Obtention d'une base végétale fermentée au jus de céréales,
   - Obtention d'un jus de cuisson de pois chiches,
   - Mélange de la base végétale fermentée au jus de céréales et du jus de cuisson de pois chiches selon un ratio compris entre 10/90 et 90/10,
   - Foisonnement dudit mélange à une température comprise entre 4 et 50°C durant 5 à 30 minutes.

2. Procédé selon la revendication 1, **caractérisé en ce que** l'obtention du jus de cuisson de pois chiches comprend la cuisson de pois chiches dans de l'eau sans ajout de sel.

3. Procédé selon la revendication 1 ou 2, **caractérisé en ce que** la base végétale fermentée au jus de céréales est une base végétale fermentée au jus de riz.

4. Ingrédient végétal foisonné, **caractérisé en ce qu'**il comprend, ou est constitué de, une base végétale fermentée au jus de céréales, préférentiellement de riz, et un jus de cuisson de pois chiches, selon un ratio entre la base végétale fermentée au jus de céréales et le jus de cuisson de pois chiches compris entre 10/90 et 90/10.

5. Ingrédient végétal foisonné selon la revendication 4, **caractérisé en ce qu'**il présente un pH compris entre 3 et 6.

6. Procédé de préparation d'un produit alimentaire aéré à partir d'une base alimentaire et d'un ingrédient végétal foisonné tel que décrit dans l'une des revendications 4 à 5, **caractérisé en ce qu'**il comprend les étapes de :

   - Préparation de la base alimentaire à aérer,
   - Préparation de l'ingrédient végétal foisonné,
   - Incorporation et mélange de l'ingrédient foisonné dans la base alimentaire.

**7.** Procédé selon la revendication 6, **caractérisé en ce que** la base alimentaire à aérer est un chocolat fondu, un mélange de chocolat et de beurre de cacao fondu, une purée de fruits, une purée de légumes, une purée de fruits et de légumes, une poudre telle que du sucre.

**8.** Procédé selon l'une des revendications 6 à 7, **caractérisé en ce qu'**il est exempt d'étapes d'ajout de texturants, d'émulsifiants, d'œufs entiers ou de blancs d'œufs, d'agents foisonnants, de correcteurs d'acidité ou de sel ou sucre autres que les sels ou sucres naturellement contenus dans la base alimentaire à aérer ou dans l'ingrédient végétal foisonné.

**9.** Produit alimentaire aéré, **caractérisé en ce qu'**il comprend un ingrédient végétal foisonné tel que décrit dans l'une des revendications 4 à 5.

Europäisches
Patentamt

European
Patent Office

Office européen
des brevets

# RAPPORT DE RECHERCHE EUROPEENNE

Numéro de la demande

EP 22 17 1198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/034856 A1 (NESTEC SA [CH]; BOVETTO LIONEL [FR] ET AL.) 6 avril 2006 (2006-04-06) | 1-5,9 | INV. A23L7/104 A23L2/02 |
| Y | * revendications 1,4,10-15 * | 1-5,9 | A23G1/52 |
| A | * page 1, lignes 3-7 * * page 2, lignes 11-30 * * page 3, lignes 2-5 * * page 4, lignes 26-30 * * page 10, lignes 12-28 * * page 9, lignes 26-28 * * exemples 1,5 * ----- | 6-8 | A23L11/00 |
| Y | CN 110 537 560 A (LIN XUE) 6 décembre 2019 (2019-12-06) | 1-5,9 | |
| A | * revendications 1-4,6 * * le document en entier * * exemple 1 * ----- | 6-8 | |
| A | US 2021/059284 A1 (REANEY MARTIN JOHN [CA] ET AL) 4 mars 2021 (2021-03-04) * alinéas [0002] - [0003], [0046], [0048], [0064], [0069] * * exemples 25,24,22,26 * ----- | 1-9 | DOMAINES TECHNIQUES RECHERCHES (IPC) |
| A | JP 2016 074647 A (KIKU MASAMUNE SAKE BREWING CO; YAEGAKI HAKKO GIKEN KK) 12 mai 2016 (2016-05-12) * alinéas [0001], [0004], [0011], [0023], [0024], [0036] * ----- | 1-9 | A23L A23G |
| A | US 2015/104556 A1 (KUMAR VIRINDER [AE] ET AL) 16 avril 2015 (2015-04-16) * alinéas [0001], [0006], [0012], [0014] - [0017] * * exemple 5 * ----- | 1-9 | |

Le présent rapport a été établi pour toutes les revendications

| Lieu de la recherche | Date d'achèvement de la recherche | Examinateur |
|---|---|---|
| Munich | 29 août 2022 | Couzy, François |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 22 17 1198**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**29-08-2022**

| Document brevet cité au rapport de recherche | Date de publication | Membre(s) de la famille de brevet(s) | Date de publication |
|---|---|---|---|
| WO 2006034856 A1 | 06-04-2006 | AR 051046 A1<br>AU 2005289071 A1<br>BR PI0515936 A<br>EP 1841326 A1<br>TW 200626073 A<br>WO 2006034856 A1 | 13-12-2006<br>06-04-2006<br>12-08-2008<br>10-10-2007<br>01-08-2006<br>06-04-2006 |
| CN 110537560 A | 06-12-2019 | AUCUN | |
| US 2021059284 A1 | 04-03-2021 | CA 3092021 A1<br>EP 3788885 A1<br>US 2021059284 A1 | 03-03-2021<br>10-03-2021<br>04-03-2021 |
| JP 2016074647 A | 12-05-2016 | AUCUN | |
| US 2015104556 A1 | 16-04-2015 | US 2015104556 A1<br>WO 2015056203 A1 | 16-04-2015<br>23-04-2015 |

EPO FORM P0460